# FASCICULE DE BREVET EUROPEEN

(11) **EP 3 605 818 B1**
(45) Date de publication et mention de la délivrance du brevet: **28.02.2024**
(21) Numéro de dépôt: 19186960.1
(22) Date de dépôt: 18.07.2019
(51) Int. Cl.: H02M 3/28, H02M 3/335, H02M 3/00

(54) **CONVERTISSEUR DE TENSION CONTINU-CONTINU A RESONANCE**
DC-DC RESONANZWANDLER
DC-DC RESONANT VOLTAGE CONVERTER

(30) Priorité: 31.07.2018 FR 1857151
(43) Date de publication de la demande: 05.02.2020
(73) Titulaire: Valeo Siemens eAutomotive France SAS, 95800 Cergy (FR)
(72) Inventeur: BOUCHEZ, Boris, 3057 SOLBERGELVA (NO)
(74) Mandataire: Valeo Powertrain Systems

(56) Documents cités:
- WO-A1-2017/049191
- CN-A- 106 936 320
- CN-A- 106 953 526
- JP-A- 2016 012 969
- US-A- 5 946 206
- US-A1- 2011 007 527
- US-A1- 2014 368 175
- TAOTAO JIN ET AL: "Multiphase LLC Series Resonant Converter for Microprocessor Voltage Regulation", THE 2006 IEEE INDUSTRY APPLICATIONS CONFERENCE FORTY-FIRST IAS ANNUAL MEETING, CONFERENCE RECORD OF, IEEE, PISCATAWAY, NJ, US, 1 October 2006 (2006-10-01), pages 2136-2143, XP031026317, ISBN: 978-1-4244-0364-6

## Description

### DOMAINE TECHNIQUE ET OBJET DE L'INVENTION

De façon générale, l'invention concerne un convertisseur de tension continu-continu à résonance, notamment dans le domaine des systèmes électriques, plus particulièrement destinés à la recharge d'une batterie d'alimentation, notamment destinés à être embarqués dans un véhicule automobile, tel qu'un véhicule automobile à moteur électrique ou hybride.

Plus précisément, dans le contexte d'un véhicule électrique ou hybride comprenant une batterie d'alimentation basse tension pour l'alimentation d'équipements électriques du véhicule et une batterie d'alimentation haute tension pour participer à la propulsion du véhicule, il est connu qu'un chargeur embarqué, couramment désigné par l'homme du métier sous l'acronyme OBC pour « On Board Charger » en anglais, comprenant un convertisseur de tension continu-continu à résonance, soit utilisé pour la recharge de la batterie d'alimentation haute tension.

L'invention concerne ainsi un convertisseur de tension continu-continu à résonance ainsi qu'un chargeur électrique comprenant un tel convertisseur. Le chargeur électrique est en particulier embarqué dans un véhicule électrique ou hybride pour notamment permettre la charge électrique d'une batterie d'alimentation haute tension du véhicule et/ou la fourniture d'énergie électrique par ladite batterie d'alimentation haute tension vers l'extérieur du véhicule, par exemple à un réseau électrique, un équipement ou un immeuble.

### ETAT DE LA TECHNIQUE

Comme cela est connu, un véhicule automobile électrique ou hybride comprend un système de motorisation électrique, alimenté par une batterie d'alimentation haute tension via un réseau électrique embarqué haute tension, et une pluralité d'équipements électriques auxiliaires alimentés par une batterie d'alimentation basse tension via un réseau électrique embarqué basse tension. Ainsi, la batterie d'alimentation haute tension assure une fonction d'alimentation en énergie du système de motorisation électrique permettant la propulsion du véhicule. La batterie d'alimentation basse tension alimente des équipements électriques auxiliaires, tels que des calculateurs embarqués, des moteurs de lève-vitres, un système multimédia, etc. La batterie d'alimentation haute tension délivre typiquement une tension comprise entre 100 V et 900 V, de préférence entre 100 V et 500 V, tandis que la batterie d'alimentation basse tension délivre typiquement une tension de l'ordre de 12 V, 24 V ou 48 V. Ces deux batteries d'alimentation haute et basse tension doivent pouvoir être chargées.

La recharge en énergie électrique de la batterie d'alimentation haute tension est réalisée de manière connue en la connectant, via un réseau électrique haute tension continue du véhicule, à un réseau d'alimentation électrique externe, par exemple le réseau électrique alternatif domestique. A cette fin, la batterie d'alimentation haute tension est apte à être connectée au réseau d'alimentation électrique alternatif domestique, pour sa charge, via un chargeur électrique embarqué, désigné OBC.

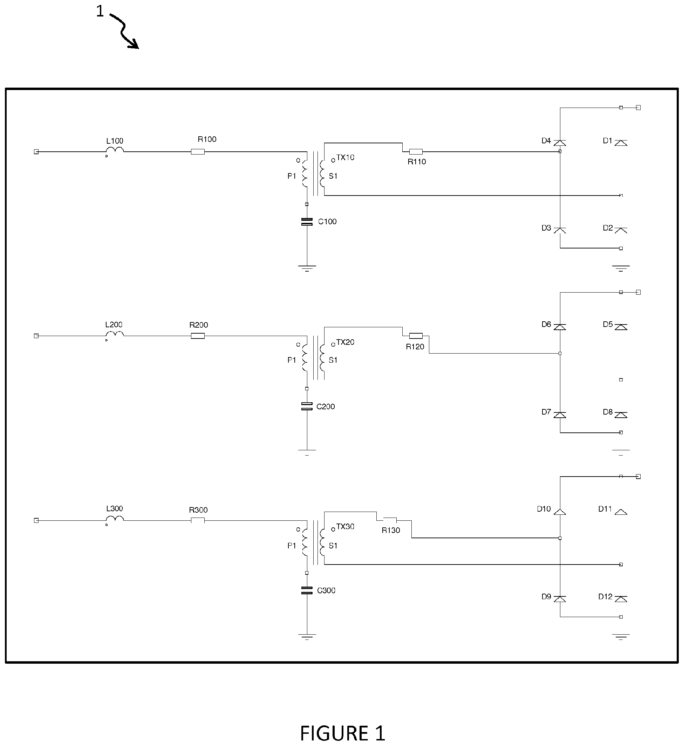

Dans une solution connue, un tel chargeur embarqué comprend principalement un circuit correcteur de facteur de puissance, appelé PFC (pour « Power Factor Correction » en anglais), et un convertisseur de tension continu-continu à résonance permettant notamment de réaliser l'isolation galvanique entre le réseau alternatif et le réseau continu. Dans une application de véhicule électrique ou hybride, il peut être nécessaire d'utiliser plusieurs convertisseurs de tension continu-continu afin de parvenir à produire la puissance nécessaire, par exemple en les connectant en parallèle. Cependant, un tel agencement peut nécessiter l'utilisation de filtres qui entrainent une surchauffe des composants. Une méthode connue pour remédier à cet inconvénient consiste à entrelacer les convertisseurs de tension continu-continu, comme cela est représenté à la figure 1 à titre d'exemple pour trois convertisseurs formant un ensemble 1 de convertisseurs. Un tel entrelacement permet de piloter les convertisseurs à une même fréquence. Lorsqu'on entrelace une pluralité de convertisseurs de tension continu-continu de type LLC afin de les piloter à une même fréquence, on constate que chaque convertisseur reste indépendant des autres en termes de dispersion des composants, ce qui peut conduire à des courants différents dans les convertisseurs de tension. Par conséquent, il peut se produire une usure plus rapide de l'un des convertisseurs par rapport aux autres, ce qui peut conduire au dysfonctionnement de l'ensemble des convertisseurs et présente donc un inconvénient important.

Il existe plusieurs topologies de convertisseur de tension continu-continu à résonance. Parmi ces topologies, on distingue notamment les convertisseurs de type LLC. De tels convertisseurs comprennent de manière connue un transformateur, comprenant une partie primaire et une partie secondaire ; une capacité ; deux bobines ; et des interrupteurs qui sont commutés de façon à permettre la conversion d'une première tension continue délivrée à la partie primaire en une deuxième tension continue fournie par la partie secondaire. Afin de réduire les pertes par commutation des interrupteurs, il est connu d'ajouter une capacité en parallèle de chaque interrupteur, une telle configuration permettant un fonctionnement de commutation à tension nulle appelé « ZVS » (Zero-Voltage Switching) par l'homme du métier. Dans un circuit de type LC, dans lequel on note Lr l'élément inductif, par exemple une bobine, et Cr la capacité de résonance, le fonctionnement en ZVS ne peut pas être mis en oeuvre de manière permanente dans des applications hautes tensions. En effet, un tel fonctionnement en ZVS nécessite de stocker de l'énergie dans la bobine Lr. Or, à des valeurs de tensions de 400 V ou supérieures, à laquelle fonctionnent de tels convertisseurs de tension continu-continu à résonance dans les véhicules électriques ou hybrides de nos jours, l'énergie traversant les interrupteurs est telle qu'elle ne peut plus être entièrement stockée dans la bobine Lr, ce qui entraine des pertes par commutation au niveau des interrupteurs. Un circuit de type LLC permet de remédier en partie à ces inconvénients, car l'ajout d'un deuxième élément inductif, notée Lm, permet de stocker de l'énergie supplémentaire par rapport à un circuit de type LC. Cependant, lorsque le deuxième élément inductif est intégré dans la partie primaire du transformateur, le stockage d'énergie nécessite une configuration particulière du transformateur, ce dernier n'étant pas adapté à l'origine pour stocker de l'énergie. Aussi, afin de permettre à la partie primaire du transformateur de stocker de l'énergie, il est connu de réaliser un entrefer dans le noyau du transformateur, notamment dans la partie primaire. Ce faisant, cela rend le transformateur plus complexe et plus onéreux à fabriquer, augmente les perturbations électromagnétiques, et peut produire des effets de bord connus sous le nom de « fringing effects » par l'homme du métier pouvant entrainer des pertes thermiques.

Les documents suivants font partie de l'état de l'art de la présente demande: CN 106 953 526, CN 106 936 320, US 2014/368175, JP 2016 012969, US 2011 /007527, WO 2017/049191, US 5 946 206, TAOTAO JIN ET AL: "Multiphase LLC Series Resonant Converter for Microprocessor Voltage Regulation".

Il existe donc le besoin d'une solution simple, fiable et efficace de chargeur électrique permettant de remédier au moins en partie à ces inconvénients.

### PRESENTATION GENERALE DE L'INVENTION

A cet effet, l'invention, qui est définie par la revendication indépendante 1, a tout d'abord pour objet un convertisseur de tension continu-continu à résonance, notamment pour véhicule électrique ou hybride, ledit convertisseur comprenant une pluralité de circuits résonants, chaque circuit résonant comprenant :-un premier élément inductif,-une capacité de résonance électriquement reliée audit premier élément inductif,-un transformateur comprenant au moins un enroulement primaire et au moins un enroulement secondaire, ledit premier élément inductif, la capacité de résonance et l'enroulement primaire du transformateur étant compris dans une branche du circuit de résonance, dite « branche de résonance »,convertisseur dans lequel d'une part, les premiers éléments inductifs des circuits résonants sont inductivement couplés entre eux, et en ce que, d'autre part, les enroulements primaires des transformateurs des circuits résonants sont inductivement couplés et électriquement reliés entre eux convertisseur dans lequel :- les branches de résonance sont électriquement reliées au niveau d'un même point appelé « premier point neutre » ; et- les branches, comprenant chacune un desdits enroulements secondaires des transformateurs, sont électriquement reliées au niveau d'un même point appelé « deuxième point neutre » ;dans lequel :le premier point neutre est relié à une masse du convertisseur continu-continu constituant un potentiel de référence du convertisseur côté primaire via une branche comprenant au moins une impédance configurée pour stocker de l'énergie etpermettre une commutation à zéro de tension d'interrupteurs du convertisseur continu-continu à résonance, l'impédance comprenant notamment une inductance en série avec une capacité, etle deuxième point neutre est relié à une masse du convertisseur continu-continu constituant un potentiel de référence du convertisseur côté secondaire via une branche comprenant au moins une impédance configurée pour stocker de l'énergie et permettre une commutation à zéro de tension d'interrupteurs du convertisseur continu-continu à résonance, l'impédance comprenant notamment une inductance en série avec une capacité.

Le couplage des éléments inductifs primaires entre eux et des enroulements primaires entre eux permet ainsi de limiter les variations de courant d'une phase par rapport à une autre à des niveaux faibles, notamment inferieurs à 10%. En particulier, chaque circuit résonant est au moins de type LC. Le convertisseur selon l'invention présente ainsi notamment une taille, un poids et un coût des filtres de compatibilité électromagnétique limités quelle que soit la plage de fonctionnement du convertisseur, c'est-à-dire quelle que soit le couple tension d'entrée-tension de sortie du convertisseur. Les circuits résonnants sont notamment entrelacés.

De préférence, le transformateur de chaque circuit résonant comprend un deuxième élément inductif, de préférence une bobine à induction, notamment connecté en parallèle de l'enroulement primaire afin de former un circuit résonant de type LLC.

De préférence encore, les deuxièmes éléments inductifs sont couplés entre eux afin de limiter les variations de courant d'un circuit résonant par rapport à un autre.

Selon un aspect de l'invention, les premiers éléments inductifs et les deuxièmes éléments inductifs sont des bobines à induction.

Avantageusement, les branches de résonance des transformateurs sont reliés au niveau d'un même point appelé « premier point neutre ».

Ledit premier point neutre est relié à la masse au côté primaire du convertisseur continu-continu via une branche comprenant au moins une impédance configurée pour stocker de l'énergie et permettre une commutation à zéro de tension d'interrupteurs du convertisseur continu-continu à résonance. En particulier, ladite impédance peut comprendre l'un d'une résistance, d'une bobine et/ou d'une capacité afin de permettre un stockage de l'énergie pour les courants dont les harmoniques sont multiples de rang n (où n est le nombre de circuits résonant). Le convertisseur de tension continu-continu à résonance peut ainsi fonctionner en ZVS indépendamment de la charge appliquée en sortie du convertisseur. En particulier, ladite impédance comprend une inductance en série avec une capacité. Par le terme « sortie », on entend les bornes du convertisseur situées du côté de la batterie d'alimentation à recharger. Cette caractéristique est particulièrement adaptée au cas où le convertisseur de tension continu-continu à résonance est un convertisseur LC car elle permet de fonctionner en ZVS quel que soit le point de fonctionnement du convertisseur.

Avantageusement encore, des branches, comprenant chacune un desdits enroulements secondaires des transformateurs sont reliées au niveau d'un même point appelé « deuxième point neutre ».

Ledit deuxième point neutre est relié à la masse au côté secondaire du convertisseur continu-continu via une branche comprenant au moins une impédance configurée pour stocker de l'énergie et permettre une commutation à zéro de tension d'interrupteurs du convertisseur continu-continu à résonance. En particulier, ladite impédance peut comprendre l'un d'une résistance, d'une bobine et/ou d'une capacité afin de permettre le fonctionnement du convertisseur en ZVS dans le sens de transfert d'énergie du secondaire vers le primaire. En particulier, ladite impédance comprend une inductance en série avec une capacité.

Selon un mode de réalisation, le point neutre est configuré de sorte à présenter un potentiel électrique flottant. En particulier, le premier point neutre est configuré de sorte à présenter un potentiel électrique flottant. C'est notamment le cas lorsque le premier point neutre est connecté uniquement aux branches de résonnance des circuits résonnants. Le premier élément inductif et la capacité de résonnance permettent déjà de mettre en oeuvre des commutations à zéro de tension d'interrupteurs dudit convertisseur, notamment lorsque le convertisseur de tension transfère de l'énergie du primaire vers le secondaire. En laissant le premier point neutre flottant, on limite le nombre de composants dans le convertisseur de tension continu-continu à résonance. En particulier, le deuxième point neutre est configuré de sorte à présenter un potentiel électrique flottant. C'est notamment le cas lorsque le deuxième point neutre est connecté uniquement à des branches comprenant les enroulements secondaires des transformateurs des circuits résonants. Le potentiel du deuxième point neutre peut notamment être laissé flottant lorsque le convertisseur de tension continu-continu à résonance est destiné à échanger de l'énergie uniquement du primaire vers le secondaire et pas du secondaire vers le primaire, c'est-à-dire lorsque le convertisseur de tension continu-continu à résonance n'est pas destiné à fonctionner de façon bidirectionnelle. Ainsi, on limite le nombre de composants dans le convertisseur de tension continu-continu à résonance. En outre, on évite la présence d'un courant d'harmonique de rang n, où n est le nombre de circuits de résonance, ce qui permet de limiter les pertes dans le convertisseur continu-continu à résonance et de limiter la valeur efficace du courant de sortie.

De préférence, au moins un circuit résonant du convertisseur comprend une structure d'entrée en demi-pont comprenant un interrupteur haut et un interrupteur bas reliés au niveau d'un point milieu, ledit point milieu étant relié à la branche de résonance dudit circuit résonant.

Dans une forme de réalisation, chaque circuit résonant comprend une structure d'entrée en demi-pont comprenant un interrupteur haut et un interrupteur bas reliés au niveau d'un point milieu, ledit point milieu étant relié à la branche de résonance respective dudit circuit résonant.

Dans une forme de réalisation, le convertisseur comprend n circuits résonants, n étant un entier naturel supérieur ou égal à deux, et un nombre p, p étant un entier naturel non nul strictement inférieur à n, desdits circuits résonants comprend une structure d'entrée en demi-pont comprenant un interrupteur haut et un interrupteur bas reliés au niveau d'un point milieu, ledit point milieu étant relié à la branche de résonance respective. Ledit convertisseur est configuré de sorte que dans un mode de fonctionnement :
- lesdits interrupteurs des p circuits résonnants commutent périodiquement de manière à transmettre une énergie à travers les circuits résonants,
- les branches de résonance des n-p autres circuits résonants étant soit en circuit ouvert ou soit reliées à une masse du convertisseur continu-continu résonant, pendant la durée de ce mode de fonctionnement.

Typiquement, dans les convertisseurs de tension à résonance, la fréquence des interrupteurs du convertisseur doit varier sur une plage importante afin d'obtenir un large intervalle de tension en sortie à partir d'une tension d'entrée donnée. Par exemple, la fréquence peut varier de 100 kHz à 1 MHz pour obtenir un intervalle de tension de 200 à 500 V à partir d'une tension d'entrée de 420 V. Ceci contraint le choix des interrupteurs utilisables dans le convertisseur de tension, complique les stratégies de pilotage des interrupteurs du convertisseur de tension, et est peu efficace en termes de rendement du convertisseur de tension. Les nombres n et p permettent d'adresser une plage de fonctionnement respective.

Selon une variante, le convertisseur de tension continu-continu à résonance comprend une unité de commande, ladite unité de commande étant configurée pour commander les interrupteurs des n-p circuits résonants afin de les mettre soit en circuit ouvert pendant la durée dudit mode de fonctionnement ou soit en connexion avec la masse du convertisseur continu-continu résonant, notamment avec la masse au côté primaire, pendant la durée de ce mode de fonctionnement.

Selon un aspect de l'invention, au moins l'un des circuits résonants, de préférence chaque circuit résonant, comprend une structure de sortie en demi-pont comprenant une diode haute et une diode basse reliées au niveau d'un point milieu, ledit point milieu étant relié à l'enroulement secondaire du transformateur dudit circuit résonant. Alternativement, les diodes peuvent être remplacées par des interrupteurs, notamment des transistors.

De manière préférée, la pluralité d'enroulements primaires est isolée galvaniquement de la pluralité d'enroulements secondaires afin de ne pas réaliser de liaison électrique entre les deux.

L'invention concerne aussi un chargeur électrique, notamment pour véhicule électrique ou hybride, comprenant un convertisseur tel que présenté précédemment.

L'invention concerne aussi un véhicule électrique ou hybride comprenant un convertisseur de tension continu-continu tel que présenté précédemment.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
- la figure 1 représente un exemple de circuit électrique comprenant trois convertisseurs continu-continu à résonance entrelacés de l'art antérieur,
- la figure 2 représente un exemple d'un convertisseur,
- la figure 3 représente une forme de réalisation d'un convertisseur selon l'invention,
- la figure 4 représente une forme de réalisation d'un convertisseur selon l'invention,
- la figure 5 représente une forme de réalisation d'un convertisseur selon l'invention,
- la figure 6 représente une forme de réalisation d'un convertisseur selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Dans la description qui sera faite ci-après, l'invention sera décrite dans son application à un véhicule automobile électrique ou hybride sans que cela ne soit limitatif de la portée de la présente invention.

Par exemple, un tel véhicule peut comprendre notamment une machine électrique, un onduleur, un ensemble de convertisseurs, une batterie d'alimentation haute tension, un réseau électrique embarqué haute tension, une batterie d'alimentation basse tension, un réseau électrique embarqué basse tension et une pluralité d'équipements électriques auxiliaires.

L'ensemble de convertisseurs selon l'invention est décrit ci-après dans sa mise en oeuvre pour un chargeur électrique, notamment embarqué dans un véhicule, sans toutefois que cela ne limite la portée de la présente invention. On notera ainsi que l'ensemble de convertisseurs pourrait être un convertisseur DCDC embarqué dans le véhicule.

Le réseau électrique embarqué basse tension relie la batterie d'alimentation basse tension et la pluralité d'équipements électriques auxiliaires afin que la batterie d'alimentation basse tension alimente lesdits équipements électriques auxiliaires, tels que des calculateurs embarqués, des moteurs de lève-vitres, un système multimédia, etc. La batterie d'alimentation basse tension délivre typiquement par exemple une tension de l'ordre de 12 V, 24 V ou 48 V. La recharge de la batterie basse tension est réalisée à partir de la batterie haute tension via un convertisseur de tension continue en tension continue, appelé communément convertisseur continu-continu (DCDC).

Le réseau électrique embarqué haute tension relie la batterie d'alimentation haute tension et l'onduleur afin que la batterie d'alimentation haute tension assure une fonction d'alimentation en énergie de la machine électrique via l'onduleur. La batterie d'alimentation haute tension délivre typiquement une tension comprise entre 100 V et 900 V, de préférence entre 100 V et 500 V. La recharge en énergie électrique de la batterie d'alimentation haute tension est réalisée en la connectant, via le réseau électrique haute tension continue du véhicule, à un réseau électrique externe, par exemple le réseau électrique alternatif domestique.

La machine électrique est une machine électrique tournante, de préférence destinée à entrainer les roues du véhicule à partir de l'énergie fournie par la batterie d'alimentation haute-tension. Plus précisément, la machine électrique est une machine électrique à courant alternatif alimentée par une source de courants polyphasés. Par exemple, la machine électrique peut être un moteur à courant alternatif. Dans l'exemple préféré décrit ci-après, la machine électrique est alimentée par une source de courants triphasés sans que cela ne soit limitatif de la portée de la présente invention.

Dans cet exemple, la commande de la machine électrique est réalisée au moyen de l'onduleur. Ledit onduleur permet de convertir le courant continu fourni par la batterie d'alimentation haute tension en trois courants de commande alternatifs, par exemple sinusoïdaux. Autrement dit, l'onduleur a pour fonction de transformer le courant continu délivré par la batterie d'alimentation haute tension en trois courants de phase permettant de commander la machine électrique. A l'inverse, dans un autre mode de fonctionnement, la machine électrique peut également fournir trois courants alternatifs à l'onduleur afin que ledit onduleur les transforme en un courant continu permettant de charger la batterie d'alimentation haute-tension.

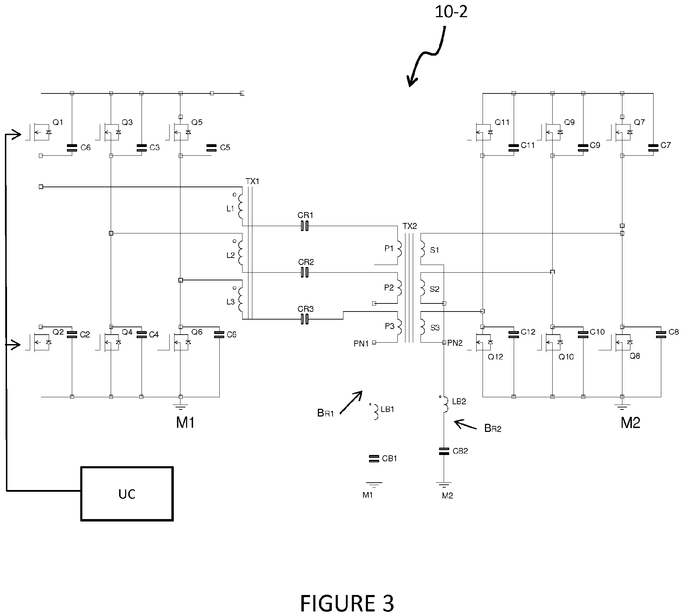

On a représenté aux figures 3 à 6 quatre formes de réalisation du convertisseur électrique selon l'invention. Le convertisseur 10-1, 10-2, 10-3, 10-4, 10-5 comprend optionnellement, une unité de commande UC.

Dans ces exemples, le convertisseur 10-1, 10-2, 10-3, 10-4, 10-5 est un convertisseur à résonance configuré pour convertir une tension continue en une tension continue et comprend trois circuits résonants. Cependant, il pourrait comprendre un nombre différent de circuits résonants.

Notamment, chaque circuit résonant comporte un transformateur, comprenant au moins un enroulement primaire P1, P2, P3 et au moins un enroulement secondaire S1, S2, S3. Chaque circuit résonant comprend en outre une capacité de résonance CR1, CR2, CR3 et un premier élément inductif L1, L2, L3. L'enroulement primaire P1, P2, P3, la capacité de résonance CR1, CR2, CR3 et le premier élément inductif L1, L2, L3 sont par exemple compris dans une branche du circuit résonant, et sont notamment en série. Par exemple, le premier élément inductif L1, L2, L3 peut être relié à une borne de la capacité de résonance CR1, CR2, CR3, l'autre borne de la capacité de résonance CR1, CR2, CR3 étant reliée à une borne de l'enroulement primaire P1, P2, P3 du transformateur, optionnellement via une résistance (non représentée).

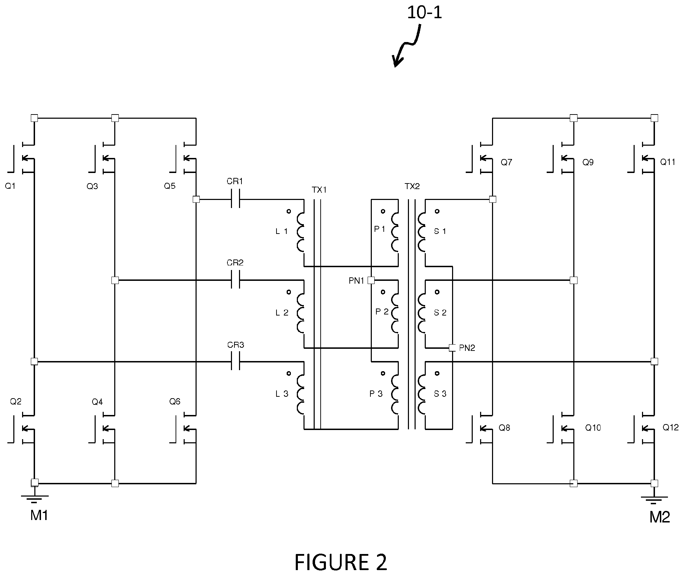

Les premiers éléments inductifs L1, L2, L3, sont de préférence des bobines à induction. Les premiers éléments inductifs L1, L2, L3 des trois circuits résonants sont couplés entre eux (couplage TX1 sur les figures 2 à 6). De même, les enroulements primaires P1, P2, P3 des trois transformateurs des circuits résonants sont couplés entre eux (couplage TX2 sur les figures 2 à 6). Une isolation galvanique est réalisée entre les enroulements primaires P1, P2, P3 et les enroulements secondaires S1, S2, S3 des transformateurs des trois circuits résonants. Une première masse M1 constitue un potentiel de référence du convertisseur 10-2, 10-3, 10-4, 10-5 côté primaire, et une deuxième masse M2 constitue un potentiel de référence du convertisseur 10-2, 10-3, 10-4, 10-5 côté secondaire.

Chaque circuit résonant comprend une structure de sortie en demi-pont comprenant un transistor haut Q7, Q9, Q11 et un transistor bas Q8, Q10, Q12, par exemple de type MOS, reliés au niveau d'un point milieu relié à l'enroulement secondaire S1, S2, S3 du transformateur dudit circuit résonant.

De manière avantageuse, un deuxième élément inductif (non représenté) peut être ajouté en parallèle de l'enroulement secondaire S1, S2, S3 du transformateur dudit circuit résonant ou en parallèle de l'enroulement primaire P1, P2, P3 du transformateur dudit circuit résonant. Ce deuxième élément inductif est de préférence une bobine à induction. Ce deuxième élément inductif permet de réaliser, avec le premier élément inductif L1, L2, L3 et la capacité de résonance CR1, CR2, CR3, un circuit résonant de type LLC. On notera que, de manière alternative, le deuxième élément inductif peut être l'enroulement secondaire S1, S2, S3 du transformateur du circuit résonant lorsque ledit enroulement secondaire S1, S2, S3 présente une inductance magnétisante, ou l'enroulement primaire P1, P2, P3 du transformateur du circuit résonant lorsque ledit enroulement primaire P1, P2, P3 présente une inductance magnétisante. Une telle inductance magnétisante peut être réalisée par un entrefer dans le noyau du transformateur.

Dans les exemples illustrés aux figures 2 à 6, les circuits résonants, sont tels que les branches de résonance qui comprennent l'enroulement primaire P1, P2, P3 sont reliées à un premier point dit « neutre » PN1 et les branches qui comprennent les enroulements secondaires S1, S2, S3 sont reliées à un deuxième point dit « neutre » PN2. Le premier point neutre PN1 et le deuxième point neutre PN2 contribuent à l'équilibre des courants circulants dans les circuits résonants.

Dans l'exemple illustré en figure 2, les points neutres PN1 et PN2 ont un potentiel électrique flottant, ce qui permet de limiter le nombre de composants du convertisseur continu-continu à résonance. Dans les exemples illustrés en figures 3 à 6, le premier point neutre PN1 et/ou le deuxième point neutre PN2 ne sont pas flottants.

Dans une variante, le premier point neutre PN1 est relié à la première masse M1 du convertisseur continu-continu via une première branche B_{R1} dite « de résonance » comprenant au moins une impédance configurée pour stocker de l'énergie et permettre une commutation à zéro de tension d'interrupteurs du convertisseur continu-continu à résonance La première branche B_{R1} reliée au premier point neutre PN1 permet de faire fonctionner le convertisseur 10-2, 10-3, 10-4, 10-5 en ZVS quel que soit le point de fonctionnement du convertisseur 10-2, 10-3, 10-4, 10-5, lorsque le convertisseur continu-continu à résonance transfert de l'énergie du primaire vers le secondaire.

Dans une variante, le deuxième point neutre PN2 est relié à la deuxième masse M2 du convertisseur continu-continu via une deuxième branche B_{R2} dite « de résonance » comprenant au moins une impédance configurée pour stocker de l'énergie et permettre une commutation à zéro de tension d'interrupteurs du convertisseur continu-continu à résonance. La deuxième branche B_{R2} reliée au deuxième point neutre PN2 permet de faire fonctionner le convertisseur 10-2, 10-3, 10-4, 10-5 en ZVS quel que soit le point de fonctionnement du convertisseur 10-2, 10-3, 10-4, 10-5, lorsque le convertisseur continu-continu à résonance transfert de l'énergie du secondaire vers le primaire.

Dans les exemples illustrés sur les figures 3 à 6, le premier point neutre PN1 est relié à la première masse M1 via une inductance LB1 et une capacité CB1 et le deuxième point neutre PN2 est relié à la deuxième masse M2 également via une inductance LB2 et une capacité CB2.

Dans l'exemple, illustrée à la figure 2, et une forme de réalisation, illustrée à la figure 3, chaque circuit résonant comprend une structure d'entrée en demi-pont de transistors comprenant un transistor haut Q1, Q3, Q5 et un transistor bas Q2, Q4, Q6, par exemple de type MOS, reliés au niveau d'un point milieu, ledit point milieu étant relié à la branche de résonance dudit circuit résonant, en particulier en un point différent du premier point neutre PN1. Cette configuration permet aux circuits de fonctionner avec trois courants d'entrée, notamment sur trois phases différentes. Une telle configuration permet de faire fonctionner le convertisseur sur les six bras des trois demi-ponts des structures d'entrée des trois circuits résonants, de manière triphasée, afin notamment de réduire à la fois le niveau de courant RMS, la taille, le poids et le coût des filtres de compatibilité électromagnétique. En particulier, les transistors Q1-Q6 commutent périodiquement de manière à transmettre de l'énergie à travers le convertisseur continu-continu à résonance 10-2.

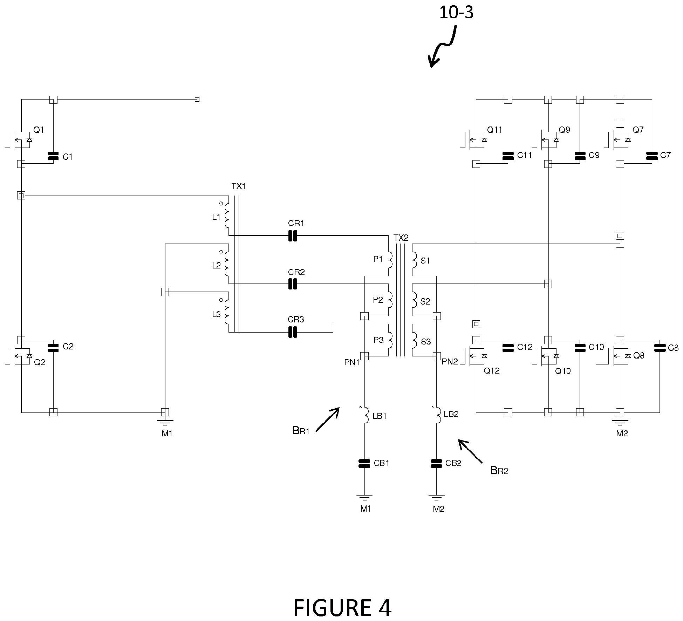

Dans une forme de réalisation illustrée à la figure 4, seul le premier circuit résonant (le circuit résonant placé en haut sur les figures) comporte une structure d'entrée en demi-pont de transistors Q1, Q2, le point milieu de ladite structure d'entrée étant relié à la branche de résonance. Le deuxième circuit résonant (circuit résonant placé au milieu sur les figures) et le troisième circuit résonant (circuit résonant placé en bas sur les figures) sont dépourvus de structure d'entrée en demi-pont de transistors, leurs branches de résonance étant toutes deux reliées à la première masse M1. Une telle configuration permet de faire fonctionner le convertisseur 10-3 sur deux bras d'interrupteurs de manière monophasée (pont diviseur de tension). En particulier, seuls les transistors Q1, Q2 du premier circuit résonant commutent périodiquement de manière à transmettre de l'énergie à travers le convertisseur continu-continu à résonance 10-3.

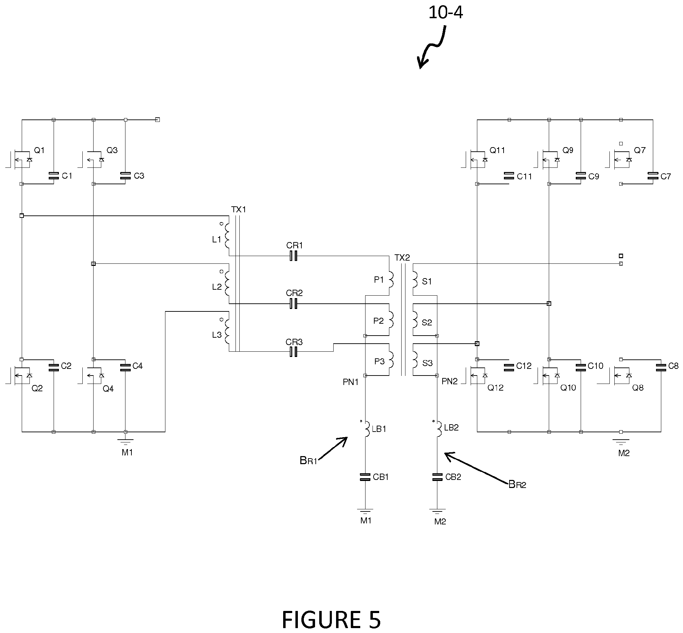

Dans une forme de réalisation illustrée à la figure 5, le premier circuit résonant et le deuxième circuit résonant comportent chacun une structure d'entrée en demi-pont de transistors Q1/Q2 et Q3/Q4. Le point milieu de la structure d'entrée du premier circuit résonant est relié à la branche de résonance du premier circuit résonant. Le point milieu de la structure d'entrée du deuxième circuit résonant est relié à la branche de résonance du deuxième circuit résonant La branche de résonance du troisième circuit résonant est reliée à la première masse M1. Une telle configuration permet de faire fonctionner le convertisseur 10-3 sur quatre bras d'interrupteurs, de manière biphasée. En particulier, seuls les transistors Q1, Q2, Q3, Q4 du premier et du deuxième circuits résonants commutent périodiquement de manière à transmettre de l'énergie à travers le convertisseur continu-continu à résonance 10-4.

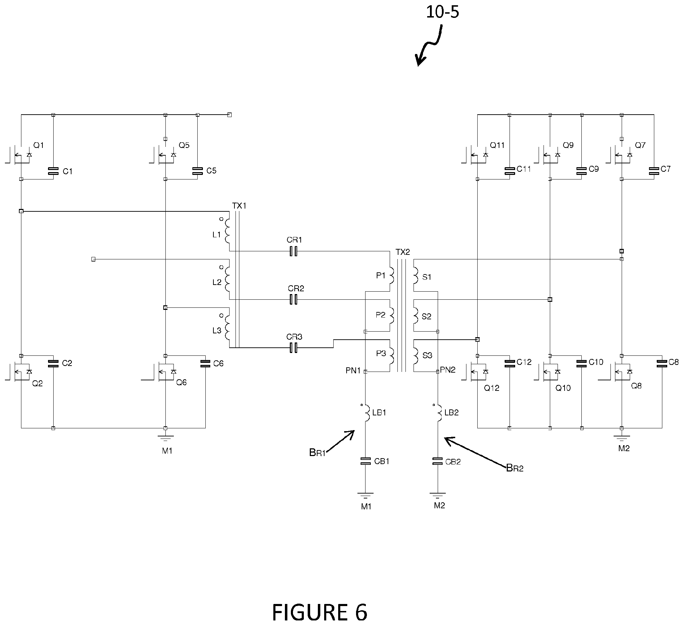

Dans la forme de réalisation illustrée à la figure 6, le premier circuit résonant et le troisième circuit résonant comportent chacun une structure d'entrée en demi-pont de transistors Q1/Q2 et Q5/Q6. Le point milieu de la structure d'entrée du premier circuit résonant est relié à la branche de résonance du premier circuit résonant. Le point milieu de la structure d'entrée du troisième circuit résonant est relié à la branche de résonance du troisième circuit résonant. Dans le deuxième circuit résonant, la branche de résonance est en circuit ouvert. Une extrémité VP2 de la branche de résonance constitue ainsi un point de potentiel flottant. Une telle configuration permet de faire fonctionner le convertisseur sur quatre bras d'interrupteurs, de manière biphasée. En particulier, seuls les transistors Q1, Q2, Q5, Q6 du premier et du troisième circuits résonants commutent périodiquement de manière à transmettre de l'énergie à travers le convertisseur continu-continu à résonance 10-5.

Les premier à cinquième modes de réalisation sont chacun avantageux sur une plage de fonctionnement du convertisseur continu-continu à résonance.

Dans une variante, le convertisseur illustré en figure 3 comprend une unité de commande UC qui est configurée pour commander le branchement des premiers éléments inductifs L1, L2, L3 des circuits résonants selon différentes configurations correspondant ici aux différentes formes de réalisation décrites sur les figures 4 à 6 afin de basculer entre différents modes de fonctionnement. Autrement dit, l'unité de commande UC permet d'obtenir les configurations illustrées en figures 4 à 6 à partir du circuit illustré en figure 3. Par exemple, le circuit illustré en figure 4 peut être obtenu à partir de celui illustré en figure 3, en maintenant fermés les interrupteurs bas Q4, Q6 des second et troisième circuits de résonance et en maintenant ouvert les interrupteurs hauts Q3, Q5 des second et troisième circuits de résonance. Les interrupteurs Q1, Q2 du premier circuit de résonance commutent périodiquement de manière à transmettre de l'énergie à travers le convertisseur continu-continu à résonance. Ainsi, on obtient une plage de fonctionnement plus grande par rapport à un fonctionnement dans lequel toutes les structures d'entrée en demi-pont de transistors commutent périodiquement pour transférer de l'énergie à travers le convertisseur de tension-continu à résonance. On peut en outre mettre en oeuvre des modes dégradés. Le convertisseur illustré en figure 2 peut comprendre une unité de commande UC similaire permettant d'obtenir les configurations de structure d'entrée des figures 4 à 6.

Dans les exemples illustrés sur les figures 3 à 6, les interrupteurs Q1, Q2, Q3, Q4, Q5, Q6, Q7, Q8, Q9, Q10, Q11, Q12 sont connectés respectivement en parallèle avec une capacité C1, C2, C3, C4, C5, C6, C7, C8, C9, C10, C11, C12 afin d'assurer un fonctionnement en ZVS.

## Revendications

1. Convertisseur (10-2, 10-3, 10-4, 10-5) de tension continu-continu à résonance, notamment pour véhicule électrique ou hybride, ledit convertisseur (10-2, 10-3, 10-4, 10-5) comprenant une pluralité de circuits résonants, chaque circuit résonant comprenant :
- un premier élément inductif (L1, L2, L3),
- une capacité de résonance (CR1, CR2, CR3) électriquement reliée audit premier élément inductif (L1, L2, L3),
- un transformateur comprenant au moins un enroulement primaire (P1, P2, P3) et au moins un enroulement secondaire (S1, S2, S3),
ledit premier élément inductif (L1, L2, L3), la capacité de résonance (CR1, CR2, CR3) et l'enroulement primaire (P1, P2, P3) du transformateur étant compris dans une branche du circuit de résonance, dite « branche de résonance »,
convertisseur (10-2, 10-3, 10-4, 10-5) dans lequel d'une part, les premiers éléments inductifs (L1, L2, L3) des circuits résonants sont inductivement couplés entre eux, et en ce que, d'autre part, les enroulements primaires (P1, P2, P3) des transformateurs des circuits résonants sont inductivement couplés et électriquement reliés entre eux ;
convertisseur ( 10-2, 10-3, 10-4, 10-5) dans lequel :
- les branches de résonance sont électriquement reliées au niveau d'un même point appelé « premier point neutre » (PN1) ; et
- les branches, comprenant chacune un desdits enroulements secondaires (S1, S2, S3) des transformateurs, sont électriquement reliées au niveau d'un même point appelé « deuxième point neutre » (PN2) ;
dans lequel :
le premier point neutre (PN1) est relié à une masse (M1,) du convertisseur continu-continu constituant un potentiel de référence du convertisseur côté primaire via une branche (BR1) comprenant au moins une impédance configurée pour stocker de l'énergie et
permettre une commutation à zéro de tension d'interrupteurs du convertisseur continu-continu à résonance, l'impédance comprenant notamment une inductance (LB1) en série avec une capacité (CB1), et
le deuxième point neutre (PN2) est relié à une masse (M2) du convertisseur continu-continu constituant un potentiel de référence du convertisseur côté secondaire via une branche (BR2) comprenant au moins une impédance configurée pour stocker de l'énergie et permettre une commutation à zéro de tension d'interrupteurs du convertisseur continu-continu à résonance, l'impédance comprenant notamment une inductance (LB2) en série avec une capacité (CB2).

2. Convertisseur ( 10-2, 10-3, 10-4, 10-5) selon la revendication 1, dans lequel le transformateur de chaque circuit résonant comprend un deuxième élément inductif afin de former un circuit résonant de type LLC.

3. Convertisseur ( 10-2, 10-3, 10-4, 10-5) selon la revendication 1, dans lequel les enroulements secondaires (S1, S2, S3) sont inductivement couplés entre eux.

4. Convertisseur ( 10-2, 10-3, 10-4, 10-5) selon l'une quelconque des revendications précédentes, dans lequel, au moins un circuit résonant du convertisseur (10-1, 10-2, 10-3, 10-4, 10-5) comprend une structure d'entrée en demi-pont comprenant un interrupteur haut et un interrupteur bas reliés au niveau d'un point milieu, ledit point milieu étant relié à la branche de résonance dudit circuit résonant.

5. Convertisseur ( 10-2, 10-3, 10-4, 10-5) selon la revendication précédente, dans lequel chaque circuit résonant comprend une structure d'entrée en demi-pont comprenant un interrupteur haut (Q1, Q2, Q3) et un interrupteur bas (Q2, Q4, Q6) reliés au niveau d'un point milieu, ledit point milieu étant relié à la branche de résonance respective dudit circuit résonant.

6. Convertisseur ( 10-2, 10-3, 10-4, 10-5) selon l'une quelconque des revendications 4 ou 5, comprenant n circuits résonants, n étant un entier naturel supérieur ou égal à deux, et dans lequel un nombre p, p étant un entier naturel non nul strictement inférieur à n, desdits circuits résonants comprend une structure d'entrée en demi-pont comprenant un interrupteur haut et un interrupteur bas reliés au niveau d'un point milieu, ledit point milieu étant relié à la branche de résonance respective,
ledit convertisseur étant configuré de sorte que dans un mode de fonctionnement :
- lesdits interrupteurs des p circuits résonnants commutent périodiquement de manière à transmettre une énergie à travers les circuits résonants,
les branches de résonance des n-p autres circuits résonants étant soit en circuit ouvert ou soit reliées à une masse (M1) du convertisseur continu-continu résonant, pendant la durée de ce mode de fonctionnement.

7. Convertisseur ( 10-2, 10-3, 10-4, 10-5) selon la revendication précédente, comprenant une unité de commande (UC), ladite unité de commande étant configurée pour commander les interrupteurs des n-p circuits résonants afin de les mettre soit en circuit ouvert pendant la durée dudit mode de fonctionnement ou soit en connexion avec la masse (M1) du convertisseur continu-continu résonant pendant la durée de ce mode de fonctionnement.

## Patentansprüche

1. Resonanz-Gleichspannungswandler (10-2, 10-3, 10-4, 10-5), insbesondere für ein Elektro- oder Hybridfahrzeug, wobei dieser Wandler (10-2, 10-3, 10-4, 10-5) mehrere Resonanzkreise umfasst, wobei jeder Resonanzkreis umfasst:
- ein erstes induktives Element (L1, L2, L3),
- eine Resonanzkapazität (CR1, CR2, CR3), die mit dem ersten induktiven Element (L1, L2, L3) elektrisch verbunden ist,
- einen Transformator, der wenigstens eine Primärwicklung (P1, P2, P3) und wenigstens eine Sekundärwicklung (S1, S2, S3) umfasst,
wobei das erste induktive Element (L1, L2, L3), die Resonanzkapazität (CR1, CR2, CR3) und die Primärwicklung (P1, P2, P3) des Transformators in einem Zweig des Resonanzkreises enthalten sind, der "Resonanzzweig" genannt wird,
wobei in dem Wandler (10-2, 10-3, 10-4, 10-5) einerseits die ersten induktiven Elemente (L1, L2, L3) der Resonanzkreise induktiv miteinander gekoppelt sind, und dadurch, dass andererseits die Primärwicklungen (P1, P2, P3) der Transformatoren der Resonanzkreise miteinander induktiv gekoppelt und elektrisch verbunden sind;
wobei in dem Wandler (10-2, 10-3, 10-4, 10-5):
- die Resonanzzweige an demselben Punkt, "erster Neutralpunkt" (PN1) genannt, elektrisch verbunden sind; und
- die Zweige, die jeweils eine der Sekundärwicklungen (S1, S2, S3) der Transformatoren umfassen, an demselben Punkt, "zweiter Neutralpunkt" (PN2) genannt, elektrisch verbunden sind;
wobei:
der erste Neutralpunkt (PN1) mit einer Masse (M1) des Gleichspannungswandlers, die ein Bezugspotential des Wandlers auf der Primärseite bildet, über einen Zweig (BR1) verbunden ist, der mindestens eine Impedanz umfasst, die dafür ausgelegt ist, Energie zu speichern und eine Umschaltung bei Nullspannung von Schaltern des Resonanz-Gleichspannungswandlers zu ermöglichen, wobei die Impedanz insbesondere eine Induktivität (LB1) umfasst, die mit einer Kapazität (CB1) in Reihe geschaltet ist, und
der zweite Neutralpunkt (PN2) mit einer Masse (M2) des Gleichspannungswandlers, die ein Bezugspotential des Wandlers auf der Primärseite bildet, über einen Zweig (BR2) verbunden ist, der mindestens eine Impedanz umfasst, die dafür ausgelegt ist, Energie zu speichern und eine Umschaltung bei Nullspannung von Schaltern des Resonanz-Gleichspannungswandlers zu ermöglichen, wobei die Impedanz insbesondere eine Induktivität (LB2) umfasst, die mit einer Kapazität (CB2) in Reihe geschaltet ist.

2. Wandler (10-2, 10-3, 10-4, 10-5) nach Anspruch 1, wobei der Transformator jedes Resonanzkreises ein zweites induktives Element umfasst, um einen Resonanzkreis vom Typ LLC zu bilden.

3. Wandler (10-2, 10-3, 10-4, 10-5) nach Anspruch 1, wobei die Sekundärwicklungen (S1, S2, S3) induktiv miteinander gekoppelt sind.

4. Wandler (10-2, 10-3, 10-4, 10-5) nach einem der vorhergehenden Ansprüche, wobei wenigstens ein Resonanzkreis des Wandlers (10-1, 10-2, 10-3, 10-4, 10-5) eine als Halbbrücke ausgebildete Eingangsstruktur umfasst, die einen oberen Schalter und einen unteren Schalter umfasst, die an einem Mittelpunkt verbunden sind, wobei der Mittelpunkt mit dem Resonanzzweig des Resonanzkreises verbunden ist.

5. Wandler (10-2, 10-3, 10-4, 10-5) nach dem vorhergehenden Anspruch, wobei jeder Resonanzkreis eine als Halbbrücke ausgebildete Eingangsstruktur umfasst, die einen oberen Schalter (Q1, Q2, Q3) und einen unteren Schalter (Q2, Q4, Q6) umfasst, die an einem Mittelpunkt verbunden sind, wobei der Mittelpunkt mit dem jeweiligen Resonanzzweig des Resonanzkreises verbunden ist.

6. Wandler (10-2, 10-3, 10-4, 10-5) nach einem der Ansprüche 4 oder 5, welcher n Resonanzkreise umfasst, wobei n eine natürliche Zahl größer oder gleich zwei ist, und wobei eine Anzahl p dieser Resonanzkreise, wobei p eine von null verschiedene natürliche Zahl kleiner als n ist, eine als Halbbrücke ausgebildete Eingangsstruktur umfasst, die einen oberen Schalter und einen unteren Schalter umfasst, die an einem Mittelpunkt verbunden sind, wobei der Mittelpunkt mit dem jeweiligen Resonanzzweig verbunden ist,
wobei der Wandler derart ausgebildet ist, dass in einer Betriebsart:
- die Schalter der p Resonanzkreise periodisch schalten, um eine Energie über die Resonanzkreise zu übertragen,
wobei die Resonanzzweige der n-p anderen Resonanzkreise für die Dauer dieser Betriebsart entweder offen oder mit einer Masse (M1) des Resonanz-Gleichspannungswandlers verbunden sind.

7. Wandler (10-2, 10-3, 10-4, 10-5) nach dem vorhergehenden Anspruch, welcher eine Steuereinheit (UC) umfasst, wobei die Steuereinheit dafür ausgelegt ist, die Schalter der n-p Resonanzkreise zu steuern, um sie entweder für die Dauer dieser Betriebsart zu unterbrechen oder für die Dauer dieser Betriebsart mit der Masse (M1) des Resonanz-Gleichspannungswandlers in Verbindung zu bringen.

## Claims

1. Resonant DC-DC voltage converter (10-2, 10-3, 10-4, 10-5), in particular for an electric or hybrid vehicle, said converter (10-2, 10-3, 10-4, 10-5) comprising a plurality of resonant circuits, each resonant circuit comprising:
- a first inductive element (L1, L2, L3),
- a resonant capacitor (CR1, CR2, CR3) electrically connected to said first inductive element (L1, L2, L3),
- a transformer comprising at least one primary winding (P1, P2, P3) and at least one secondary winding (S1, S2, S3),
said first inductive element (L1, L2, L3), the resonant capacitor (CR1, CR2, CR3) and the primary winding (P1, P2, P3) of the transformer being comprised in a branch of the resonant circuit, called the "resonant branch", in which converter (10-2, 10-3, 10-4, 10-5), on the one hand, the first inductive elements (L1, L2, L3) of the resonant circuits are inductively coupled to one another, and on the other hand, the primary windings (P1, P2, P3) of the transformers of the resonant circuits are inductively coupled and electrically connected to one another;
and in which converter (10-2, 10-3, 10-4, 10-5):
- the resonant branches are electrically connected to the same point, which is called the "first neutral point" (PN1); and
- the branches, which each comprise one of said secondary windings (S1, S2, S3) of the transformers, are electrically connected to the same point, which is called the "second neutral point" (PN2);
wherein:
the first neutral point (PN1) is connected to a ground (M1) of the DC-DC converter constituting a reference potential of the converter primary-side via a branch (BR1) comprising at least one impedance configured to store energy and to allow zero-voltage switching of switches of the resonant DC-DC converter, the impedance in particular comprising an inductor (LB1) in series with a capacitor (CB1), and
the second neutral point (PN2) is connected to a ground (M2) of the DC-DC converter constituting a reference potential of the converter secondary-side via a branch (BR2) comprising at least one impedance configured to store energy and to allow zero-voltage switching of switches of the resonant DC-DC converter, the impedance in particular comprising an inductor (LB2) in series with a capacitor (CB2).

2. Converter (10-2, 10-3, 10-4, 10-5) according to Claim 1, wherein the transformer of each resonant circuit comprises a second inductive element in order to form an LLC resonant circuit.

3. Converter (10-2, 10-3, 10-4, 10-5) according to Claim 1, wherein the secondary windings (S1, S2, S3) are inductively coupled to one another.

4. Converter (10-2, 10-3, 10-4, 10-5) according to any one of the preceding claims, wherein at least one resonant circuit of the converter (10-1, 10-2, 10-3, 10-4, 10-5) comprises a half-bridge input structure comprising a high switch and a low switch that are connected to a midpoint, said midpoint being connected to the resonant branch of said resonant circuit.

5. Converter (10-2, 10-3, 10-4, 10-5) according to the preceding claim, wherein each resonant circuit comprises a half-bridge input structure comprising a high switch (Q1, Q2, Q3) and a low switch (Q2, Q4, Q6) that are connected to a midpoint, said midpoint being connected to the respective resonant branch of said resonant circuit.

6. Converter (10-2, 10-3, 10-4, 10-5) according to either of Claims 4 and 5, comprising n resonant circuits, n being a natural number greater than or equal to two, and wherein a number p, p being a non-zero natural number strictly less than n, of said resonant circuits comprises a half-bridge input structure comprising a high switch and a low switch that are connected to a midpoint, said midpoint being connected to the respective resonant branch,
said converter being configured so that in an operating mode:
- said switches of the p resonant circuits switch periodically so as to transmit energy through the resonant circuits,
the resonant branches of the n-p other resonant circuits being either open-circuit or connected to a ground (M1) of the resonant DC-DC converter, throughout this operating mode.

7. Converter (10-2, 10-3, 10-4, 10-5) according to the preceding claim, comprising a control unit (UC), said control unit being configured to control the switches of the n-p resonant circuits in order either to make them open-circuit throughout said operating mode or to connect them to the ground (M1) of the resonant DC-DC converter throughout this operating mode.
